# EUROPEAN PATENT APPLICATION

(11) **EP 4 527 496 A1**
(43) Date of publication of application: **26.03.2025**
(21) Application number: 23939065.1
(22) Date of filing: 27.06.2023
(51) Int. Cl.: B01J 8/06, B01J 8/02, B01J 19/00, B01J 19/24

(54) **ZERO-CARBON-EMISSION DEVICE AND PROCESS FOR GENERATING HOT AIR OR HIGH-TEMPERATURE STEAM OR PRODUCING PURIFIED WATER**

(30) Priority: 02.06.2023 CN 202310652644
(71) Applicant: Guangzhou Boxenergy Technology Co. Ltd., Guangzhou, Guangdong 510663 (CN)
(72) Inventor: XIAO, Tiancun, Guangzhou, Guangdong 510663 (CN)
(74) Representative: Chung, Hoi Kan
(86) International application number: PCT/CN2023/102847
(87) International publication number: WO 2024/244082

(57) **Abstract**

The present invention discloses a zero-carbon-emission device and process for generating hot air or high-temperature steam or producing pure water, including a gas storage unit, a gas conduct device, a reaction chamber, and a heating conduct device, where the gas storage unit is configured to store hydrogen and oxygen or air respectively; the gas storage unit is connected to the reaction chamber through the gas conduct device respectively, and the gas conduct device is configured to convey the oxygen or the air and the hydrogen of the gas storage unit to the reaction chamber; the reaction chamber is further provided with a hot and moist air outlet, and the hot and moist air outlet is connected to the heating conduct device; and the reaction chamber is provided with a plurality of layers of pipes that are connected in sequence.

## Description

### TECHNICAL FIELD

The present invention relates to the technical field of indoor heating or the field of hot water or pure water production, and specifically, to a zero-carbon-emission device and process for generating hot air or high-temperature steam or producing pure water.

### BACKGROUND

In the world today, the development of new energy is urgent, because petroleum, natural gas, coal, petroleum gas, and other in-use energy are non-renewable resources with limited reserves on the earth. However, human survival is inseparable from the energy, so new energy must be found. As the consumption of fossil fuels increases, reserves of the fossil fuels are diminishing. One day these resources and energy will be exhausted. This urgently requires finding new energy-containing carrier with abundant reserves that does not rely on the fossil fuels. Hydrogen is just such secondary energy. Hydrogen is at the head of the periodic table of elements with an atomic number of 1, is gaseous at room temperature and pressure, and is liquid at ultra-low temperature and high pressure. As ideal new energy-containing material, the hydrogen has the following characteristics:
1. Lightest weight: under a standard state, the density is 0.0899 g/L; the hydrogen may become liquid at -252.7°C; and if the pressure is increased to hundreds of atmospheric pressure, liquid hydrogen may become metallic hydrogen. 2. Best thermal conductivity: 10 times higher than thermal conductivity coefficients of most gases. 3. Abundant reserves: it is estimated that the hydrogen constitutes 75% of the mass of the universe, the hydrogen is mainly stored in water in the form of compounds, and water is the most extensive substance on the earth; and it is estimated that if all the hydrogen in seawater is extracted, the total heat the hydrogen generates is 9000 times greater than the heat released by all fossil fuels on the earth. 4. Recycling: the waste discharged by a vehicle using hydrogen energy is only water, so the hydrogen may be decomposed again and recycled again. 5. Ideal calorific value: in addition to nuclear fuels, the calorific value of the hydrogen is the highest among all fossil fuels, chemical fuels, and biofuels, which is 142351 kJ/kg and is 3 times a calorific value of gasoline. 6. Good combustion performance: the hydrogen ignites quickly, has a wide flammable range when mixed with air, and has a high ignition point and a fast combustion speed. 7. Environmental protection: compared with other fuels, the hydrogen is the cleanest when burned; in addition to water and a small amount of ammonia, the hydrogen does not produce pollutants such as carbon monoxide, carbon dioxide, hydrocarbons, lead compounds, and dust particles that are harmful to the environment; the small amount of ammonia does not pollute the environment after proper treatment; and replacing the fossil fuels with the hydrogen can minimize a greenhouse effect the greatest extent. 8. A plurality of forms of use: the hydrogen may generate heat energy through combustion and mechanical work in a heat engine, and may also be used as an energy material for fuel cells, or converted into solid hydrogen for use as a structural material. 9. A plurality of states: the hydrogen appears in gaseous, liquid, or solid metal hydrides, which can adapt to different requirements of storage and transportation and various application environments. 10. Low loss: long-distance high-voltage power transmission may be eliminated and replaced by long-distance and short-distance pipe hydrogen transmission, which is relatively safer and reduces ineffective energy loss. 11. High utilization rate: the hydrogen eliminates a noise source of an internal combustion engine and a hidden danger of energy pollution, and has a high utilization rate. 12. Convenient transportation: the hydrogen may reduce fuel weight and increase a payload of a transportation means, which may reduce transportation costs; and considering the overall benefits, total social benefits are better than that of other energy.

At present, the main focus of hydrogen energy in household use is on a hydrogen boiler. Most hydrogen boilers burn hydrogen in the air instead of natural gas (or methane). However, a combustion manner of the hydrogen boiler is not much different from that of a natural gas boiler. The hydrogen boiler uses oxygen and hydrogen free radicals in the air to burn, and obtains hot water through boiler heat exchange. Combustion tail gas contains carbon dioxide, carbon monoxide, VOCs, water steam, and the like, which are discharged outdoors with the tail gas, and some heat is also taken away. Meanwhile, because a combustion temperature of the hydrogen is too high, high-concentration hydrogen (5vol%) produces NOx when burned in the air, causing huge pollution to the environment and causing a greenhouse effect. At present, electronic ignition is adopted in various combustion heating, which requires natural gas or hydrogen and natural gas mixtures to operate above the explosion concentration limit and is performed through free radical combustion, so that a risk coefficient is high.

### SUMMARY

To overcome the deficiencies of the prior art, a first purpose of the present invention is to provide a zero-carbon-emission device for generating hot air or high-temperature steam or producing pure water, which can increase a contact area between a catalyst and hydrogen and oxygen in a reaction chamber, and hot and moist air generated by a reaction between the hydrogen and the oxygen may be introduced indoors through a heating conduct device for heating and air purifying and moisturizing. A second purpose of the present invention is to provide a zero-carbon-emission process for generating hot air or high-temperature steam or producing pure water, where the hydrogen and the oxygen or air pass through a catalyst bed, so that the hydrogen fully reacts with the oxygen in the air, and at the same time, some VOCs existing in the air, such as formaldehyde and carbon monoxide, are also catalyzed and oxidized into water and carbon dioxide, thereby obtaining water and hot and moist air. The hot and moist air may be directly introduced into a space that needs heating in a directed manner, or heat of the hot and moist air is used for heating, or water steam in the hot and moist air is condensed to produce high-purity water.

The first purpose of the present invention is implemented through the technical solutions as follows:
A zero-carbon-emission device for generating hot air or high-temperature steam or producing pure water includes: a gas storage unit, a gas conduct device, a reaction chamber, and a heating conduct device, where the gas storage unit is configured to store hydrogen and oxygen or air respectively; the gas storage unit is connected to the reaction chamber through the gas conduct device respectively, and the gas conduct device is configured to convey the oxygen or the air and the hydrogen of the gas storage unit to the reaction chamber; the reaction chamber is further provided with a purified hot and moist air outlet, and the hot and moist air outlet is connected to the heating conduct device; the reaction chamber is provided with a plurality of layers of pipes that are connected in sequence, the reaction chamber is configured to generate the hydrogen, a temperature may be controlled by controlling a flow rate of the hydrogen and a ratio of the hydrogen to the oxygen, and there is no reaction of generating water and heat; the pipe is internally filled or coated with a catalyst, to form a catalyst bed; and the catalyst includes a carrier and an active ingredient loaded on a surface of the carrier, and the active ingredient contains one or more than two metal elements of transition metals of group 7, 8, 9, 10 or 11.

Specifically, the device of the present invention can be configured for indoor heating, and a principle thereof is similar to that of an indoor electric heater. Since pure hydrogen is used, no carbon oxides are produced, and gas discharging is not required. All hot gases are gathered indoors, and indoor air is also circulated into the device and enters the reaction chamber to pass through the catalyst bed. A hydrogen-oxygen reaction is performed on a mixture of hydrogen and air below an explosion limit through the catalyst bed, to generate water steam. Since the hydrogen-oxygen reaction is an exothermic reaction, a temperature of the catalyst bed can be raised to even above 100°C. A high temperature can sterilize and disinfect air in the reaction chamber and generate heat to heat the air. Therefore, the device can purify pollutants in the air, thereby forming completely clean and warm indoor air, achieving a purpose of indoor heating. Meanwhile, when the hot and moist air generated during a hydrogen-oxygen catalytic reaction exchanges heat with cold air indoors after being discharged from the device, the water steam in the hot and moist air plays a role of moisturizing the indoor air.

Further, the device further includes a water tank, and the water tank is connected to the heating conduct device. The hot and moist air contains a large amount of water steam which may be condensed to form pure water and collected in the water tank, or heat in the hot and moist air is used to heat the water in the water tank.

Further, the device includes a heating device, and the heating device is connected to the reaction chamber; and the heating device is configured to increase a reaction temperature in the reaction chamber.

Further, the device further includes a renewable energy power generation device and a water electrolytic cell, the renewable energy power generation device is electrically connected to the water electrolytic cell, and the water electrolytic cell is connected to the gas storage unit; the renewable energy power generation device is configured to provide energy for the water electrolytic cell; the water electrolytic cell is configured to generate the hydrogen and the oxygen; and the renewable energy power generation device is a solar power generation device or a wind power generation device.

Further, the active ingredient includes one or more than two elements of Fe, Co, Ni, Cu, Tc, Ru, Rh, Pd, Ag, Re, Os, Ir, Pt, and Au; and more preferably, the metal is selected from group 8, 9, 10, and/or 11 in the periodic table of elements. Suitable metals of group 8, 9, 10, or 11 include Ni, Ir, Pd, Ru, Rh, and Pt. Most preferably, the metal is platinum or palladium. Two or more metals may exist in the catalyst in combination. An active ingredient content in the catalyst may be from 0.001 wt% to 100 (wt)%. Preferably, an active metal content does not exceed 20 wt%, and more ideally, a metal content does not exceed 5 wt%.

The carrier includes one or more than two compositions of aluminum oxide, modified aluminum oxide, spinel oxide, perovskite, silicon dioxide, modified silicon dioxide, magnesium oxide, titanium oxide, zirconium oxide, zeolite, aluminate, and manganous oxide. Considering stability thereof, the aluminum oxide, silica-alumina molecular sieve, and the spinel oxide such as calcium hexaluminate are preferred. These porous materials may be used alone or in combination. Molecular sieves, such as zeolites, may also be selected according to a required final product. The carrier is preferably porous. A particle size of the carrier is ideally 0.01 mm to 10 mm, more preferably 0.02 mm to 4 mm. A surface area of a carrier material is ideally more than 1.0 m²/g, preferably more than 5 m²/g, and one carrier or a mixture of at least two carriers may be used.

Specifically, a preparation method of the catalyst includes the following steps.

The preparation method of the catalyst includes an impregnation method or a coprecipitation method.

The impregnation method includes the following steps:
1) dissolving an active ingredient containing metal salt and/or metal oxide in water, and adjusting pH to 4 to 14 to adjust an isoelectric point of the surface of the carrier, to prepare a solution;
2) soaking the carrier in the solution, and then drying and calcining an impregnated carrier; and
3) performing hydrogen activation on a calcined carrier, to obtain an eggshell catalyst. An active component of the eggshell catalyst is distributed on an outer surface of the carrier, which helps a catalytic reaction.

The coprecipitation preparation method includes the following steps:
1) preparing a metal solution A containing an active component and a solution B containing a carrier component;
2) mixing the solution A and the solution B, stirring and uniformly mixing, adjusting pH to 3 to 10, to enable a metal of the active component and the carrier component to be precipitated, and standing for layering;
3) taking out precipitate at a bottom layer, and drying the precipitate after washing; and
4) molding dried precipitate after roasting, and then introducing the hydrogen for reduction, to obtain the catalyst.

Further, the reaction chamber is provided with a temperature sensor and a gas flow meter; and the heating conduct device is a directed fluidic pipe. Hot air that contains water steam and that is purified may be conveyed to an object that needs heating, such as people or rooms, through a hot air fluidic pipe at a tail end in a directed manner, which is more targeted.

The second purpose of the present invention is implemented through the technical solutions as follows:
a zero-carbon-emission process for generating hot air or high-temperature steam or producing pure water, based on a zero-carbon-emission device for generating hot air or high-temperature steam or producing pure water, including the following steps:
1) introducing hydrogen and air of a gas storage unit to a reaction chamber, to be in contact with a catalyst bed of a pipe, and initiating a reaction between the hydrogen and oxygen, to generate water steam and obtain hot and moist air; and
2) discharging from a hot and moist air outlet to a heating conduct device for heating and air purifying and moisturizing.

Further, step 3) is further included: conveying the hot and moist air to a room-temperature water tank through the heating conduct device for condensing the water steam in the hot and moist air to obtain and collect pure water.

Further, step 4) is further included: when the device is configured to produce the pure water, immersing the device in seawater, where a hydrogen stream reacts with an air stream or an oxygen stream through the catalyst bed, and internal heat is generated, to evaporate the seawater.

Further, in step 1), if a temperature in the reaction chamber is lower than 10°C, the reaction chamber is heated, and a heating temperature is 50°C to 95°C; and an amount of the hydrogen added is 0.1% to 8% of air flow in the pipe.

Compared with the prior art, beneficial effects of the present invention are as follows:
(1) A zero-carbon-emission device and process for generating hot air or high-temperature steam or producing pure water includes: a gas storage unit, a gas conduct device, a reaction chamber, and a heating conduct device, where the gas storage unit is configured to store hydrogen and oxygen or air respectively; the gas storage unit is connected to the reaction chamber through the gas conduct device respectively, and the gas conduct device is configured to convey the oxygen or the air and the hydrogen of the gas storage unit to the reaction chamber; the reaction chamber is further provided with a hot and moist air outlet, and the hot and moist air outlet is connected to the heating conduct device; the reaction chamber is provided with a plurality of layers of pipes that are connected in sequence, and the reaction chamber is configured to initiate a reaction that hydrogen reacts with oxygen to generate water and heat; and the pipe is internally filled or coated with a catalyst, to form a catalyst bed. The oxygen or the air and the hydrogen enter the reaction chamber from an oxygen inlet and a hydrogen inlet respectively and are fully mixed and in contact with a catalyst in the reaction chamber for reaction, and formed hot and moist air is introduced into a space that needs heating in a directed manner through the heating conduct device or is used for heating a medium. Since a high temperature of the hot and moist air may play a role of sterilization and disinfection, the device of the present invention not only may be configured for indoor heating and air moisturizing, but also may purify the air.
(2) The device of the present invention may further include a water tank, and the heating conduct device is connected to the water tank. The hot and moist air is directly introduced into the water tank, and after the hot and moist air is washed by cold water in the water tank, not only heat of the hot and moist air is taken away, but also moisture in the hot and moist air is condensed in the water tank, which may be used to produce high-purity water.
(3) The device of the present invention may further include a renewable energy power generation device and a water electrolytic cell, where the renewable energy power generation device provides energy for the water electrolytic cell, and the water electrolytic cell can convert superfluous and unstable solar energy, wind energy, or valley electricity into hydrogen and oxygen through water electrolysis, which could be stored separately. The hydrogen is conveyed to a gas storage unit for storing, and the hydrogen is conveyed to the reaction chamber for reaction when needed, thereby achieving effects of energy saving, environmental protection, and reducing energy loss.
(4) In the device of the present invention, the reaction chamber can be provided with at least two hydrogen inlets and two air inlets. Hydrogen may be added in stages during reaction, and an amount of hydrogen added in each stage does not exceed 8% (volume ratio) of air flow in the pipe. A minimum amount may even be as low as 0.1(vol)%, and a specific amount of hydrogen added is adjusted according to an indoor addition speed. The hydrogen is preferably green hydrogen, which does not contain other heteroatom gases. It can be known from a test that: after a reaction of hydrogen in a first stage is completed, a subsequent temperature shows that a temperature in the pipe of the reaction chamber increases by 50°C to 70°C after every 1% volume concentration of hydrogen is added. According to indoor heating needs, hydrogen needs to be added in time in a second stage, to enable the reaction to be continued, and similarly, after 1 (vol) % of hydrogen is consumed, the temperature in the pipe should be between 50°C and 70°C. An oxygen concentration in the air in the reaction pipe may decrease accordingly according to an amount of hydrogen added, and hot water steam may be generated in the air at the same time. More importantly, the provided catalyst enables incoming hydrogen to react completely with oxygen, and outlet hydrogen is less than 10 ppm. Even if 0.4(vol) % of H₂ is in the air and passes through the catalyst bed, or a temperature of the catalyst bed is raised by 8°C to 20°C, which is related to a gas flow rate.
(5) The process of the present invention includes the following steps: 1) introducing hydrogen and air of a gas storage unit to a reaction chamber, to be in contact with a catalyst bed of a pipe, and initiating a reaction between the hydrogen and oxygen, to generate water steam and obtain hot and moist air; and 2) discharging from a hot and moist air outlet to a heating conduct device for indoor heating and air purifying and moisturizing. During reaction between the hydrogen and the oxygen, as long as a reaction temperature is higher than 10°C, the reaction can proceed smoothly. If a room temperature of the catalyst bed is lower than 10°C, according to properties of the catalyst, a small amount of heat may need to be provided to initiate the reaction. After the reaction is initiated, since the reaction is an exothermic reaction, even without heating, as long as the catalyst exists, the hydrogen and the oxygen in the reaction chamber can continue to react completely, to generate water steam. Since the reaction chamber is configured to be a plurality of pipes, after one or more stages of reactions, residual oxygen in a hot gas flow (with hydrogen as a main gas stream) or residual hydrogen (with oxygen or air as a main gas stream) generally does not exceed 50 ppm, and may even be as low as 1 ppm. After the reaction is initiated, although the reaction is a hydrogen-oxygen reaction, the device can ensure that a volume concentration of hydrogen or oxygen in the air is lower than an explosion limit from the beginning through gas flow of the gas storage unit, and since the catalyst is used to catalyze the reaction between the hydrogen and the oxygen, it is not necessary to increase the amount of hydrogen to be above the explosion limit to initiate the reaction. Based on the device and the process of the present invention, reaction safety and reliability can be ensured.
(6) When the device is configured to produce the pure water, the device of the present invention may be immersed in seawater, and when a stream containing oxygen or a pure oxygen stream and a hydrogen stream pass through the catalyst bed, internal heat is generated, to evaporate the seawater. Meanwhile, water generated through a hydrogen-oxygen reaction of the catalyst bed is directly collected through cooling.

### BRIEF DESCRIPTION OF THE DRAWINGS

FIG. 1 is a schematic diagram of a size and a shape of a catalyst;
FIG. 2 is a catalyst evaluation device generated by hot air;
FIG. 3 is a hot air discharging device;
FIG. 4 is a schematic diagram of device connection of Embodiment 1;
FIG. 5 is a schematic diagram of device connection of Embodiment 2; and
FIG. 6 is a schematic diagram of device connection of Embodiment 3.

Reference numerals in the drawings: 1. hydrogen container; 2. oxygen container; 3. gas conduct device; 4. reaction chamber; 41. pipe; 42. catalyst bed; 43. oxygen inlet; 44. hydrogen inlet; 45. hot and moist air outlet; 5. heating conduct device; 6. water tank; 7. water electrolytic cell.

### DETAILED DESCRIPTION OF THE EMBODIMENTS

The present invention is further described below with reference to the accompanying drawings and specific embodiments, and it should be noted that, on the premise of no conflict, a new embodiment may be formed by any combination between the embodiments described below or between the technical features.

When a device of the present invention is used for heating or producing high-purity water (for example, a water-deficient region), flow directions of hydrogen and oxygen or air are generally that a pure hydrogen stream flows through a main pipe 41, the main pipe 41 is filled with a catalyst or a pipe wall is coated with a catalyst, and the oxygen (the air) is added into the pipe 41 in stages. A reaction chamber 4 of the present invention may be made to be a helical shape, a tubular shape, or a calandria. An inner surface of the pipe 41 is loaded or coated with the catalyst, to form a catalyst bed 42. The hydrogen stream flows through the catalyst bed 42, and then oxygen not exceeding 5%, preferably less than 4%, of hydrogen flow of the main pipe 41 is introduced from a side pipe. Gases flow through the catalyst bed 42 after being mixed, and the hydrogen reacts with the oxygen, to generate hot water steam and a hot gas stream. If further heating is needed or more water needs to be produced, oxygen not exceeding 5% (volume ratio) of remaining hydrogen flow in the main pipe 41 may be introduced again in a next stage, so that more heat and water steam may be generated. Every time oxygen accounting for 1% of the hydrogen flow of the main pipe 41 is added to the main pipe 41, after passing through the catalyst bed 42, the oxygen may be catalytically reacted basically and completely converted into water, where residual oxygen does not exceed 100 ppm. After a hydrogen bed is added with the oxygen and passes through the catalyst bed 42, a temperature may be raised to 100°C to 140°C per 1% oxygen consumption. An obtained gas stream rich in the water steam and hot hydrogen may be directly introduced into water from the other end of a main reaction pipe through a heating conduct device 5, to exchange heat with the water. The hot water steam remains in an aqueous phase, and the hydrogen may take away a trace of oxygen originally dissolved in the water, and also play a role of deoxidizing and preventing corrosion of the device. Hydrogen that is unreacted and enriched in a water tank 6 is further compressed from a top end of the closed water tank 6 and returns to a hydrogen container 1 of a gas storage unit, or enters the main reaction pipe 41.

Specifically, the hydrogen reacts with the oxygen through the catalyst bed 42 in the pipe 41, generated water and superfluous hydrogen flow out of a spiral pipe, the water stays in the water tank 6 that is sealed and that contains cold water, and redundant hydrogen returns to the hydrogen container 1 at a top end of a water groove.

Certainly, in a catalytic reaction for producing the high-purity water, the oxygen may also flow through the main pipe 41 filled with the catalyst or coated with the catalyst, and hydrogen accounting for 4% (volume ratio) of oxygen flow of the main pipe 41 is introduced at a side line pipe 41 for reaction. However, according to this process, after the hydrogen flows out of the main pipe 41, superfluous oxygen increases a dissolved oxygen concentration in the water, which may be detrimental to an anti-corrosion system of the water tank 6 and the pipe 41.

A chemical reaction of the present invention may be expressed as follows:

2H₂ + O₂ → 2H₂O + heat.

During indoor heating, the catalyst bed also has a purifying effect on an indoor pollutant, and a possible reaction is that VOCs such as formaldehyde are oxidized into water and carbon dioxide. The reaction may further include other reactions, for example:

CH₂O + 1/2O₂ → CO₂ + H₂O;

and

CO + 1/2O₂ → CO₂.

During indoor heating, an ideal volume ratio of the hydrogen to the oxygen in the air is 1:5~200, preferably 1:(5~20). During indoor heating, even if the oxygen used is seriously excessive, it can ensure that a mixture in the reaction chamber 4 is within an explosion limit safety range. Meanwhile, even though the hydrogen is consumed to generate heat and hot air, an oxygen content in the hot air does not decrease much, and therefore, the hot air may all be circulated indoors, ensuring efficient indoor heating without affecting an oxygen concentration.

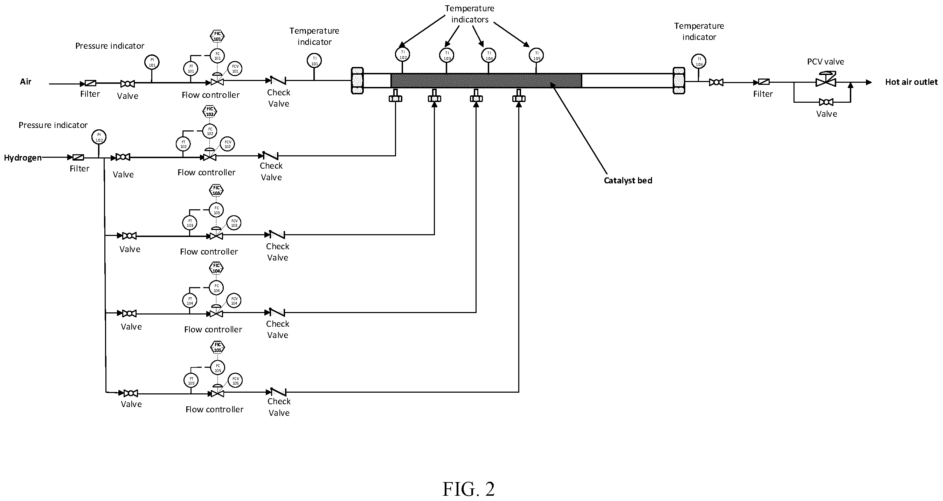

As shown in FIG. 2, FIG. 2 is a laboratory device for evaluating the catalyst used in the present invention, and a working principle thereof is as follows: flow of the air and the hydrogen can be adjusted, the catalyst bed is internally provided with four hydrogen inlets, one air inlet is provided, the air flows along the catalyst bed, the hydrogen is added in stages, to ensure that an amount of hydrogen introduced in each stage does not exceed an explosion limit of mixed gas, and on the catalyst, the air reacts with the hydrogen in the catalyst bed to generate water. The catalyst bed is provided with four thermocouples configured to monitor a temperature of the catalyst bed during reaction. According to the above device, it can be known that when the hydrogen reacts with the oxygen to generate the water, a temperature is also increased, so that the air passing through the catalyst bed can be heated to form hot air.

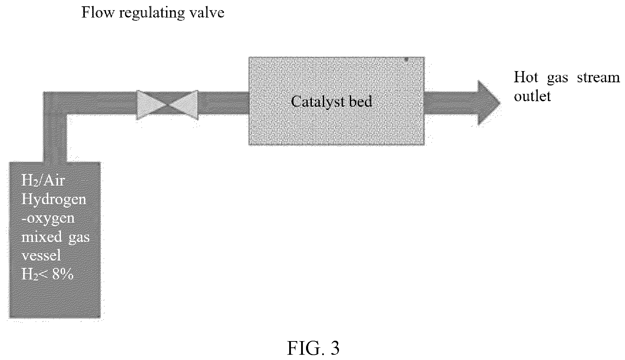

As shown in FIG. 3, in FIG. 3, the hydrogen and the air are stored in a mixed gas vessel, a volume concentration of the hydrogen is limited to be less than 8%, then mixed gas passes through a flow regulating valve to enter the catalyst bed, and the mixed gas reacts under the action of the catalyst to generate water. Meanwhile, because the reaction is an exothermic reaction, the mixed gas in the catalyst bed is heated to form a hot gas stream.

In conclusion, the above two devices both can prove that the catalyst of the present invention can play a role of catalyzing a hydrogen-oxygen reaction, and whether the hydrogen and the air (oxygen) are mixed or enter the catalyst bed respectively, a good catalytic effect can be obtained. Because the reaction is an exothermic reaction, a gas stream introduced is heated in the catalyst bed, so that a hot gas stream is obtained.

### Embodiment 1

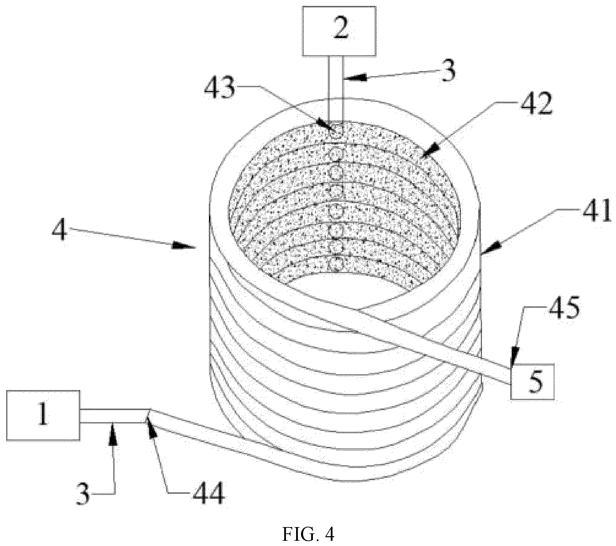

As shown in FIG. 4, a device of the embodiment is an indoor chemical zero carbon heating system, including: a hydrogen container 1, an oxygen container 2, a gas conduct device 3, a reaction chamber 4, and a heating conduct device 5, where the reaction chamber 4 is provided with a plurality of layers of pipes 41 that are connected in sequence; a side line of the pipe 41 at each layer is provided with an oxygen inlet 43, and the reaction chamber 4 is further internally provided with at least one hydrogen inlet 44; the pipe 41 is internally filled with a catalyst, to form a catalyst bed 42; the hydrogen container 1 and the oxygen container 2 are connected to the oxygen inlet 43 and the hydrogen inlet 44 of the reaction chamber 4 respectively through the gas conduct device 3; and the reaction chamber 4 is further provided with a hot and moist air outlet 45, and the hot and moist air outlet 45 is connected to the heating conduct device 5.

A zero-carbon-emission process for generating hot air or high-temperature steam or producing pure water includes the following steps:
1) introducing hydrogen and air of a gas storage unit to the reaction chamber 4, to be in contact with the catalyst bed 42 of the pipe 41, and initiating a reaction between the hydrogen and oxygen, to generate water steam and obtain hot and moist air; and
2) collecting from the hot and moist air outlet 45 to the heating conduct device 5 for indoor heating and air purifying and moisturizing.

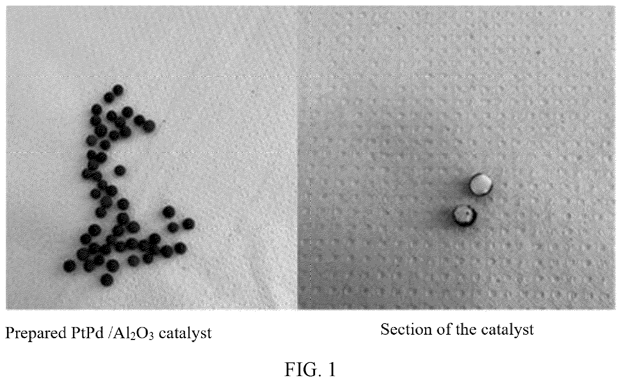

The catalyst in Embodiment 1 is prepared by using a metal salt impregnation wet method, which includes the following steps:
1) preparing to obtain an H₂PtCl₄ solution with a Pt metal content of 0.2 wt% and an H₂PdCl₄ solution with a Pd content of 0.6 wt%;
2) adding ammonia water into 2.5 mL of H₂PtCl₄ solution, adjusting a pH value to 9, impregnating a gamma γ-Al₂O₃ carrier that is dried at 120°C after the solution is mixed, drying an impregnated carrier overnight at 100°C in an oven, then washing the catalyst with water until no chloride ions are detected, drying again, then placing a dried sample in a muffle furnace, and calcining at 500°C for 2 hours at a heating rate of 5 °C/min in the air;
3) taking another 3 mL of 0.6% H₂PdCl₄ solution, adjusting pH to 9 with ammonia water, impregnating a Pt/Al₂O₃ sample that is calcined above again, standing for 24 hours, drying overnight at 100°C in the oven again, washing again with distilled water until no chloride ions are detected, then placing a dried sample in the muffle furnace, and calcining at 500°C for 2 hours at a heating rate of 5 °C/min in the air;
4) finally activating a calcined carrier under H₂ at 500°C for 2 hours at a heating rate of 2 °C/min, followed by an intermediate drying step of drying for 1 hour in tubular furnace downflow at 150°C, where a flow rate is 2 L/h/g of hydrogen; and using N2 for blowing to remove residual hydrogen in a pipeline when reduction is finished, to avoid explosion; and
5) sieving the catalyst to a suitable particle size, preferably 200 µm to 355 µm, to obtain an eggshell catalyst as shown in FIG. 1, where an active component of the eggshell catalyst is distributed on an outer surface of the carrier and has an extensive contact surface with a hydrogen-oxygen reactant, thereby avoiding a delayed reaction due to a significant difference in diffusion coefficients of hydrogen-oxygen molecules.

The pipe 41 is a spiral pipe, a length of the pipe 41 is 1.5 m, an inner diameter is 5 mm, a thickness of the catalyst bed 42 is 20 mm, the oxygen container 2 stores air, and 50 L/min of air is introduced at the oxygen inlet 43 of a copper pipe, the copper pipe is provided with two hydrogen inlets 44 on a side line, a flow rate of a first path of hydrogen is 1.8 L/min, and after the first path of hydrogen is introduced, at 20 cm from an inlet of the first path of hydrogen, a gas temperature in the pipeline is measured to be 180°C; and in a second stage, after hydrogen is introduced into the reaction chamber 4, at 20 cm behind an inlet of the second path of hydrogen, a gas stream temperature is measured to be 260°C. Finally, the hot and moist air is collected at the hot and moist air outlet 45 and is analyzed by a hydrogen sensor and a mass spectrometry, to obtain that a hydrogen content in the hot and moist air is not higher than 10 ppm through analysis. The hot and moist air is conveyed from the hot and moist air outlet 45 to a 6 m³ room through the heating conduct device 5 (a directed fluidic pipe); and through measurement and calculation, a room temperature of the room rises from 12°C to 20°C within 15 min, and humidity of the room also increases to 86% at the same time.

### Embodiment 2

Preparation of a catalyst is as follows:
taking 100 g of α-Al₂O₃ balls (a specific surface area: 4.9 m²/g, provided by Zibo Ying he Chemical Co., Ltd.) that are dried for 4 hours at 120°C, soaking in 30 ml of an aqueous solution of Pt(NH₃)₄(NO₃)₂ and Fe(NO₃)₂ that contains 2.0 g of Fe and 0.1 g of Pt, standing for 2 hours at a room temperature, then drying for 4 hours in an oven at 80°C, and then calcining in a muffle furnace for 4 hours at 500°C, to obtain an aluminum oxide-loaded catalyst precursor containing platinum oxide and iron oxide, where the catalyst is then heated to 600°C at 2 °C/min in a mixed gas stream of 1 H₂/3 Ar at 100 mL/min, and is maintained for 4 hours, to obtain a catalyst in a working state; and if the catalyst is used for in-pipe coating, the catalyst needs to be ground to 120 meshes or finer, and mixed with a small amount of water, to be prepared to a flowing gel, to be coated pneumatically.

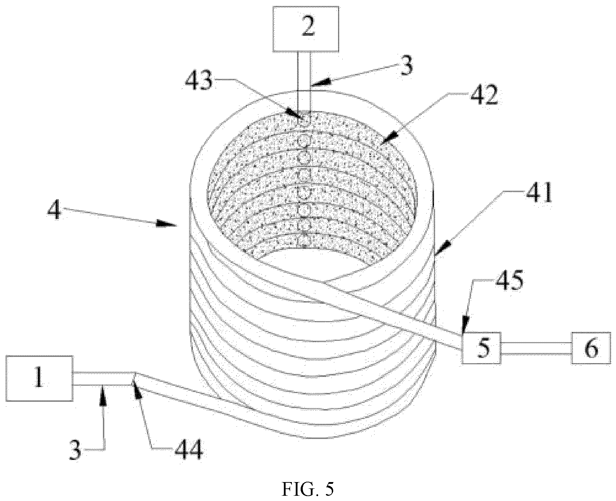

As shown in FIG. 5, a device of the embodiment is a chemical pure water production and seawater heating system, including a hydrogen container 1, an oxygen or air container 2, a gas conduct device 3, a reaction chamber 4, a heating conduct device 5, and a water tank 6, where the reaction chamber 4 is provided with a plurality of layers of pipes 41 that are connected in sequence; a side line of the pipe 41 at each layer is provided with an air or oxygen inlet 43, and the reaction chamber 4 is internally provided with at least one hydrogen inlet 44; the pipe 41 is internally coated with a catalyst, or catalyst particles of 100 µm to 1000 µm are randomly dispersed in the pipe 41, to form a catalyst bed 42; the hydrogen container 1 and the oxygen or air container 2 are connected to the air or oxygen inlet 43 and the hydrogen inlet 44 of the reaction chamber 4 respectively through the gas conduct device 3; and the reaction chamber 4 is further provided with a hot and moist air outlet 45, and the hot and moist air outlet 45 is connected to the heating conduct device 5. The water tank 6 is connected to the heating conduct device 5, and the water tank 6 is configured to store seawater and collect pure water.

The pipe 41 is a spiral copper pipe, a length of the pipe 41 is 5 m, an inner diameter is 6 mm, and a thickness of the catalyst bed 42 is 2 mm. The heating conduct device 5 is first extended to a water tank 6 filled with 2 L of water, where the water tank 6 stores seawater, and the oxygen container 2 stores air; 50 L/min of air is introduced at the oxygen inlet 43 of the copper pipe, and hydrogen is introduced at the hydrogen inlet 44 of the copper pipe with a flow rate of 30 L/min. Oxygen is first introduced at the oxygen inlet 43 of the pipe 41 at a first layer with an oxygen flow rate of 1 L/min, and a gas stream temperature is measured to be 320°C at 30 cm behind an oxygen contact point. Subsequently, (0.8 - 1) L/min of oxygen is introduced at the oxygen inlets 43 of the pipes 41 at second to fifth layers respectively; after three stages of oxygen addition, a temperature of hydrogen gas flowing out from the hot and moist air outlet 45 in the pipe 41 reaches 600°C; and after hot and moist air is introduced into the water tank 6 through the heating conduct device 5, a temperature measured at the water tank 6 is 258°C. The hot and moist air containing water and oxygen and having a high temperature is directly introduced into the water tank 6, the seawater in the water tank 6 is evaporated, then the temperature of the water tank 6 decreases after standing still, the water in the hot and moist air is condensed into water, the hydrogen enters a top end of the water tank 6, and after 10 minutes, a temperature of the water in the water tank 6 is 89°C, and a water volume also increases from 2 L to 2.08 L. It can be seen that during this process, the seawater is first evaporated to obtain distilled water, a gas stream containing hot steam is cooled through the seawater, and the hot steam thereof is condensed into clean liquid water, facilitating collection.

### Embodiment 3

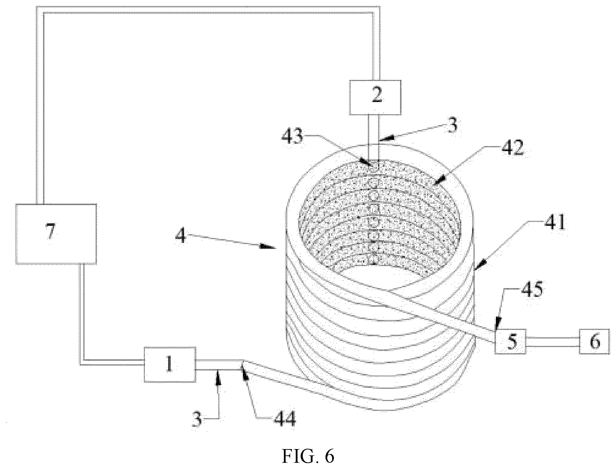

As shown in FIG. 6, a water electrolytic cell 7 is added in a device of Embodiment 3 based on Embodiment 2, and the water electrolytic cell 7 may use superfluous light energy, wind energy, or valley electricity as energy to electrolyze water into hydrogen and oxygen to be used as hydrogen and oxygen sources of the embodiment.

The above implementations are only preferred implementations of the present invention and cannot be used to limit the protection scope of the present invention, and any non-substantive changes and substitutions made by a person skilled in the art on the basis of the present invention shall fall within the protection scope of the present invention.

## Claims

1. A zero-carbon-emission device for generating hot air or high-temperature steam or producing pure water, comprising a gas storage unit, a gas conduct device, a reaction chamber, a heating conduct device, and a water tank, wherein the gas storage unit is configured to store hydrogen and oxygen or air respectively; the gas storage unit is connected to the reaction chamber through the gas conduct device respectively, and the gas conduct device is configured to convey the oxygen or the air and the hydrogen of the gas storage unit to the reaction chamber; the reaction chamber is further provided with a hot and moist air outlet, and the hot and moist air outlet is connected to the heating conduct device; the water tank is connected to the heating conduct device; the reaction chamber is provided with a plurality of layers of pipes that are connected in sequence, and the pipe is internally filled or coated with a catalyst, to form a catalyst bed; the catalyst bed is configured to promote a reaction between the hydrogen and the oxygen, to generate water and heat; and the catalyst comprises a carrier and an active ingredient loaded on a surface of the carrier, and the active ingredient contains one or more than two metal elements of transition metals of group 7, 8, 9, 10 or 11.

2. The zero-carbon-emission device for generating hot air or high-temperature steam or producing pure water according to claim 1, wherein the device comprises a heating device, and the heating device is connected to the reaction chamber; and the heating device is configured to increase a reaction temperature in the reaction chamber.

3. The zero-carbon-emission device for generating hot air or high-temperature steam or producing pure water according to claim 1, wherein the device further comprises a renewable energy power generation device and a water electrolytic cell, the renewable energy power generation device is electrically connected to the water electrolytic cell, and the water electrolytic cell is connected to the gas storage unit; the renewable energy power generation device is configured to provide energy for the water electrolytic cell; the water electrolytic cell is configured to generate the hydrogen and the oxygen; and the renewable energy power generation device is a solar power generation device or a wind power generation device.

4. The zero-carbon-emission device for generating hot air or high-temperature steam or producing pure water according to claim 1, wherein the active ingredient comprises one or more than two elements of Fe, Co, Ni, Cu, Tc, Ru, Rh, Pd, Ag, Re, Os, Ir, Pt, and Au; and the carrier comprises one or more than two compositions of aluminum oxide, modified aluminum oxide, spinel oxide, perovskite, silicon dioxide, modified silicon dioxide, magnesium oxide, titanium oxide, zirconium oxide, zeolite, aluminate, and manganous oxide.

5. The zero-carbon-emission device for generating hot air or high-temperature steam or producing pure water according to claim 1, wherein a preparation method of the catalyst comprises an impregnation method or a coprecipitation method;
the impregnation method comprises the following steps:
1) dissolving an active ingredient containing metal salt and/or metal oxide in water, and adjusting pH to 4 to 14 to adjust an isoelectric point of the surface of the carrier, to prepare a solution;
2) soaking the carrier in the solution, and then drying and calcining an impregnated carrier; and
3) performing hydrogen activation on a calcined carrier, to obtain an eggshell catalyst; and
the coprecipitation preparation method comprises the following steps:
1) preparing a metal solution A containing an active component and a solution B containing a carrier component;
2) mixing the solution A and the solution B, stirring and uniformly mixing, adjusting pH to 3 to 10, to enable a metal of the active component and the carrier component to be precipitated, and standing for layering;
3) taking out precipitate at a bottom layer, and drying the precipitate after washing; and
4) molding dried precipitate after roasting, and then introducing the hydrogen for reduction, to obtain the catalyst.

6. The zero-carbon-emission device for generating hot air or high-temperature steam or producing pure water according to claim 1, wherein the reaction chamber is provided with a temperature sensor and a gas flow meter; and the heating conduct device is a directed fluidic pipe.

7. A zero-carbon-emission process for generating hot air or high-temperature steam or producing pure water, based on a zero-carbon-emission device for generating hot air or high-temperature steam or producing pure water according to claim 1, comprising the following steps:
1) introducing hydrogen and air of a gas storage unit to a reaction chamber, to be in contact with a catalyst bed of a pipe, and initiating a reaction between the hydrogen and oxygen, to generate water steam and obtain hot and moist air; and
2) discharging from a hot and moist air outlet to a heating conduct device for indoor heating and air purifying and moisturizing.

8. The zero-carbon-emission process for generating hot air or high-temperature steam or producing pure water according to claim 7, further comprising: step 3) conveying the hot and moist air to a room-temperature water tank through the heating conduct device for condensing the water steam in the hot and moist air to obtain and collect pure water.

9. The zero-carbon-emission process for generating hot air or high-temperature steam or producing pure water according to claim 8, further comprising: step 4) when the device is configured to produce the pure water, immersing the device in seawater, wherein a hydrogen stream reacts with an air stream or an oxygen stream through the catalyst bed, and internal heat is generated, to evaporate the seawater.

10. The zero-carbon-emission device for generating hot air or high-temperature steam or producing pure water according to claim 1, wherein in step 1), if a temperature in the reaction chamber is lower than 10°C, the reaction chamber is heated, and a temperature is 50°C to 95°C; and an amount of the hydrogen added is 0.1% to 8% of air flow in the pipe.
